# EUROPEAN PATENT APPLICATION

(11) **EP 2 587 427 A1**
(43) Date of publication of application: **01.05.2013**
(21) Application number: 11186468.2
(22) Date of filing: 25.10.2011
(51) Int. Cl.: G06Q 10/10, H04L 9/08, H04L 29/06, H04L 12/18

(54) **System and method for securely creating mobile device application workgroups**

(71) Applicant: Research In Motion Limited, Waterloo, ON N2L 3W8 (CA)
(72) Inventor: Strahl, Ernest, Rudi, Waterloo, Ontario N2L 2M8 (CA)
(74) Representative: MERH-IP Matias Erny Reichl Hoffmann

(57) **Abstract**

Presented are systems and methods for providing moderator control in a heterogeneous conference including activating a secure workgroup sharing system between an organizing mobile device and one or more invitee mobile devices, such that activating the secure workgroup sharing system generates a secure workgroup invitation. The secure workgroup sharing system sends the secure workgroup invitation and a security key to one or more invitees associated with the one or more invitee mobile devices. The secure workgroup sharing system receives a security key, matching the sent security key, and an acceptance of the secure workgroup invitation from at least one of the one or more invitee mobile devices, and establishes a peer-to-peer workgroup allowing direct secure communications between the organizing mobile device and at least one of the one or more invitee mobile devices.

## Description

### FIELD

Example embodiments relate to systems and methods for securely creating an application workgroup, and in particular to systems and methods for sharing data within a secure peer-to-peer workgroup independent of electronic mail applications.

### BACKGROUND

In general, users that wish to share application data between devices make use of a secondary messaging (electronic mail) of file-transfer application and forward the data as an attachment. For example, users in a meeting sometimes wish to share data files with others in the meeting. One method of sharing the file is to open an email program, for example, Microsoft Outlook™, attach the file and send the data file through a cellular network to other users that oftentimes are in the same room. Moreover, the data files can be large, thus consuming large amounts of network resources in addition to potentially increasing costs to the user for sending large amounts of data over the network.

Additionally, while data can be shared in a local area network, to do so in a secure fashion generally requires each terminal coupled to the network to manually enter a security key to join the local area network. Moreover, in some cases, for example, Wi-Fi DIRECT™, Wi-Fi connections can be established through pushing a button on each device participating in the network within a specific period of time, which initiates setup and connection.

### BRIEF DESCRIPTION OF THE DRAWINGS

Reference will now be made, by way of example, to the accompanying drawings which show example embodiments of the present application, and in which:

**Figure 1** shows, in block diagram form, an example system utilizing a secure workgroup sharing system;

**Figure 2** shows a block diagram illustrating a mobile communication device in accordance with an example embodiment;

**Figure 3** is a block diagram depicting an example secure workgroup sharing system;

**Figure 4A** illustrates an example application open on an organizing device;

**Figure 4B** illustrates an example application and a menu;

**Figure 4C** illustrates an example new workgroup graphical user interface;

**Figure 5** shows a flowchart representing an example method for generating a secure workgroup invitation on an organizing device; and

**Figure 6** shows a flowchart representing an example method for joining a secure workgroup.

### DESCRIPTION OF EXAMPLE EMBODIMENTS

The example embodiments below describe secure workgroup sharing systems and methods where a user of the organizing device designates one or more invitees to receive a secure workgroup invitation. The secure workgroup invitation includes a security key, which is generated by the secure workgroup sharing system. The secure workgroup sharing system can send the secure workgroup invitation to the designated invitees via an instant messaging server. Then the secure workgroup sharing system establishes a peer-to-peer workgroup with one or more invitee devices based in part on the security key sent in the secure workgroup invitation.

Additionally, the organizing device can acquire a data file to share with the one or more invitees. In some embodiments, once the secure peer-to peer workgroup is established, the organizing device sends the data file via the peer-to-peer network to designated invitee devices.

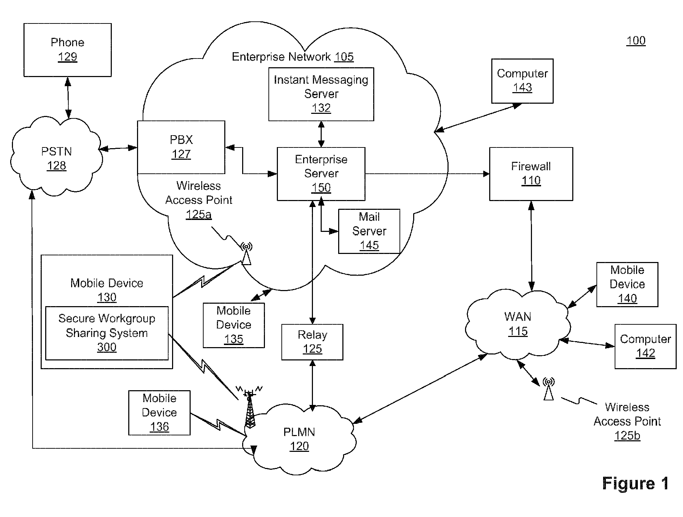

Reference is now made to **Figure 1****,** which shows, in block diagram form, an example system utilizing a secure workgroup sharing system for creating a secure workgroup to share data between a plurality of devices, generally designated 100, for the control and management of communications. System 100 includes an enterprise network 105, which in some embodiments includes a local area network (LAN). In some embodiments, enterprise network 105 can be an enterprise or business system. In some embodiments, enterprise network 105 includes more than one network and is located in multiple geographic areas.

Enterprise network 105 can be coupled, often through a firewall 110, to a wide area network (WAN) 115, such as the Internet. Enterprise network 105 can also be coupled to a public switched telephone network (PSTN) 128 via direct inward dialing (DID) trunks or primary rate interface (PRI) trunks.

Enterprise network 105 can also communicate with a public land mobile network (PLMN) 120, which is also referred to as a wireless wide area network (WWAN) or, in some cases, a cellular network. The coupling with PLMN 120 is via a relay 125, as known in the art.

In some embodiments, enterprise network 105 provides a wireless local area network (WLAN), not shown, featuring wireless access points, such as wireless access point 125a. In some embodiments, other WLANs can exist outside enterprise network 105. For example, a WLAN coupled to WAN 115 can be accessed via wireless access point 125b. WAN 115 is coupled to one or more mobile devices, for example mobile device 140. Additionally, WAN 115 can be coupled to one or more desktop or laptop computers 142.

System 100 can include a number of enterprise-associated mobile devices, for example, mobile devices 130, 135, 136, and 140. Mobile devices 130, 135, 136, and 140 can include devices equipped for cellular communication through PLMN 120, mobile devices equipped for Wi-Fi communications over one of the WLANs via wireless access points 125a or 125b, or dual-mode devices capable of both cellular and WLAN communications. Wireless access points 125a or 125b can be configured to WLANs that operate in accordance with one of the IEEE 802.11 specifications. In some embodiments, the memory stores user-profile information, including unique device identifiers, for example a device personal identification number (PIN), user identifier, place of employment, location data, work phone number, home address, etc. Additionally, the memory can store information relating to various people, for example, name of a user, a user's identifier (user name, email address, or any other identifier), place of employment, location data, work phone number, home address, device PIN, etc.

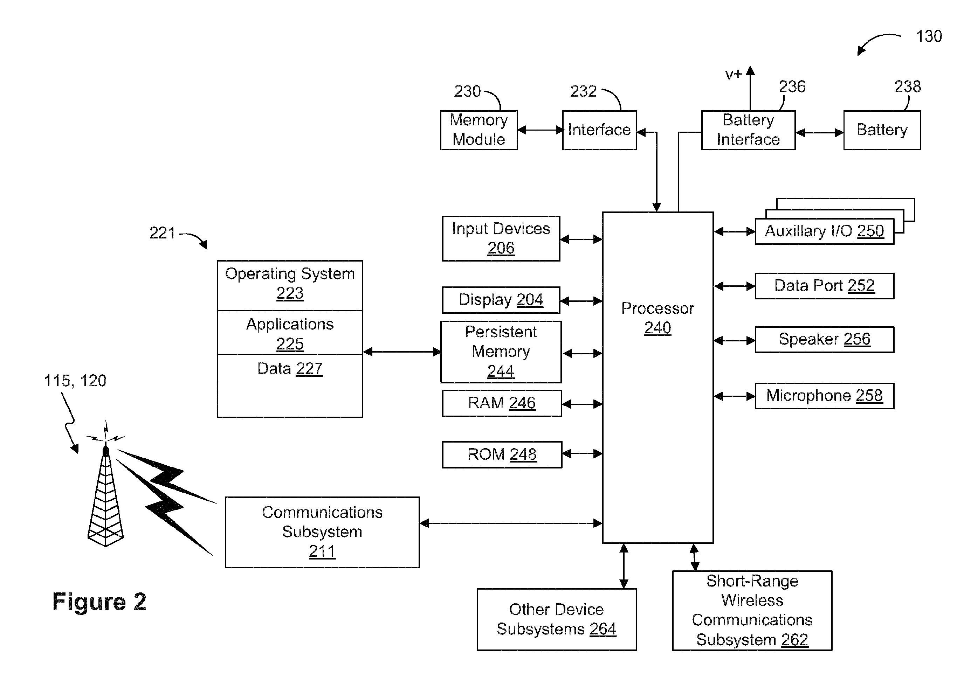

Mobile devices 130, 135, 136, and 140 can be, for example, cellular phones, smartphones, tablets, netbooks, and a PDA (personal digital assistant) enabled for wireless communication. Moreover, mobile devices 130, 135, 136, and 140 can communicate with other components using voice communications or data communications (such as accessing content from a website). Mobile devices 130, 135, 136, and 140 include devices equipped for cellular communication through PLMN 120, devices equipped for Wi-Fi communications via wireless access points 125a or 125b, or dual-mode devices capable of both cellular and WLAN communications. Mobile devices 130, 135, 136, and 140 are described in detail below in Figure 2.

Mobile devices 130, 135, 136, and 140 also include one or more radio transceivers and associated processing hardware and software to enable wireless communications with PLMN 120, and/or one of the WLANs via wireless access points 125a or 125b. In various embodiments, PLMN 120 and mobile devices 130, 135, 136, and 140 are configured to operate in compliance with any one or more of a number of wireless protocols, including GSM, GPRS, CDMA, EDGE, UMTS, EvDO, HSPA, 3GPP, or a variety of others. It will be appreciated that mobile devices 130, 135, 136, and 140 can roam within PLMN 120 and across PLMNs, in known manner, as their user moves. In some instances, dual-mode mobile devices 130, 135, 136, and 140 and/or enterprise network 105 are configured to facilitate roaming between PLMN 120 and a wireless access points 125a or 125b, and are thus capable of seamlessly transferring sessions (such as voice calls) from a coupling with the cellular interface of dual-mode device (i.e., 130, 135, 136, and 140) to a WLAN interface of the dual-mode device, and vice versa.

Enterprise network 105 typically includes a number of networked servers, computers, and other devices. For example, in some embodiments enterprise network 105 couples one or more computers 143 (one shown). The coupling can be wired or wireless in some embodiments.

Computers 142 and 143 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible nontransitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory.

In some embodiments, enterprise network 105 includes one or more mail servers, such as mail server 145, for coordinating the transmission, storage, and receipt of electronic messages, including conference call invitations, for client devices operating within enterprise network 105. Typical mail servers include the Microsoft Exchange Server™ and the IBM Lotus Domino™ server. Each user within the enterprise typically has at least one user account within the enterprise network 105. Associated with each user account is message address information, such as an e-mail address, user name, etc. Messages addressed to a user message address are stored on the enterprise network 105 in mail server 145. The messages can be retrieved by the user using a messaging application, such as an email client application. In some embodiments, the messaging application operates on mobile devices 130, 135, and 136 coupled to enterprise network 105 within the enterprise. Using the messaging application, the user composes and sends messages addressed to others, within or outside enterprise network 105. The messaging application causes mail server 145 to send a composed message to the addressee, often via WAN 115.

Relay 125 serves to route messages received over PLMN 120 from mobile device 130 to the corresponding enterprise network 105. Relay 125 also pushes messages from enterprise network 105 to mobile device 130 via PLMN 120.

Enterprise network 105 also includes an enterprise server 150. Together with relay 125, enterprise server 150 functions to redirect or relay incoming e-mail messages addressed to a user's e-mail address through enterprise network 105 to the user's mobile device 130 and to relay incoming e-mail messages composed and sent via mobile device 130 out to the intended recipients within WAN 115 or elsewhere. Enterprise server 150 and relay 125 together facilitate a "push" e-mail service for mobile device 130, enabling the user to send and receive e-mail messages using mobile device 130 as though the user were coupled to an e-mail client within enterprise network 105 using the user's enterprise-related e-mail address, for example on computer 143.

As is typical in many enterprises, enterprise network 105 includes a Private Branch eXchange ("PBX"; although in various embodiments the PBX can be a standard PBX or an IP-PBX for simplicity the description below uses the term PBX to refer to both) 127 having a coupling with PSTN 128 for routing incoming and outgoing voice calls for the enterprise. PBX 127 is coupled to PSTN 128 via DID trunks or PRI trunks, for example. PBX 127 can use ISDN signaling protocols for setting up and tearing down circuit-switched couplings through PSTN 128 and related signaling and communications. In some embodiments, PBX 127 can be coupled to one or more conventional analog telephones 129. PBX 127 is also coupled to enterprise network 105 and, through it, to telephone terminal devices, such as digital telephone sets (not shown), softphones operating on computers 143, etc. Within the enterprise, each individual can have an associated extension number, sometimes referred to as a PNP (private numbering plan), or direct dial phone number. Calls outgoing from PBX 127 to PSTN 128 or incoming from PSTN 128 to PBX 127 are typically circuit-switched calls. Within the enterprise, e.g. between PBX 127 and terminal devices, voice calls are often packet-switched calls, for example Voice-over-IP (VoIP) calls.

System 100 includes one or more instant messaging server(s) 132 (one shown). Instant messaging server 132 is part of enterprise network 105. Instant messaging server 132 is implemented on one or more servers having suitable communications interfaces for coupling to and communicating with enterprise server 150. Instant messaging server 132 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible nontransitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory. In some embodiments, the memory stores user-profile information, including unique device identifiers, for example a device personal identification number (PIN). Additionally, the memory can store information relating to various people, for example, name of a user, a user's identifier (user name, email address, or any other identifier), location data, place of employment, work phone number, home address, device PIN, etc.

Mobile device 130 has a secure workgroup sharing system 300 and is in communication with enterprise network 105. In some example embodiments, secure workgroup sharing system 300 also operates on mobile devices 135, 136, and 140, or computers 142 and 143, or both. In some embodiments, secure workgroup sharing system 300 is in communication with and operates as part of a larger secure workgroup program installed on mobile devices 130, 135, 136, and 140, and other servers on the enterprise network 105, for example, instant messaging server 132.

Reference is now made to **Figure 2** which illustrates in detail mobile device 130 in which example embodiments can be applied. Note that while **Figure 2** is described in reference to mobile device 130, it also applies to mobile devices 135, 136, and 140. Mobile device 130 is a two-way communication device having data and voice communication capabilities, and the capability to communicate with other computer systems, for example, via the Internet. Depending on the functionality provided by mobile device 130, in various embodiments mobile device 130 can be a handheld device, a multiple-mode communication device configured for both data and voice communication, a smartphone, a mobile telephone, a tablet, or a PDA (personal digital assistant) enabled for wireless communication.

Mobile device 130 includes a rigid case (not shown) housing the components of mobile device 130. The internal components of mobile device 130 can, for example, be constructed on a printed circuit board (PCB). The description of mobile device 130 herein mentions a number of specific components and subsystems. Although these components and subsystems can be realized as discrete elements, the functions of the components and subsystems can also be realized by integrating, combining, or packaging one or more elements in any suitable fashion.

Mobile device 130 includes a controller comprising at least one processor 240 (such as a microprocessor), which controls the overall operation of mobile device 130. Processor 240 interacts with device subsystems such as a communications subsystem 211 for exchanging radio frequency signals with the wireless network (e.g. WAN 115 and/or PLMN 120) to perform communication functions. Processor 240 interacts with additional device subsystems including a display 204 such as a liquid crystal display (LCD) screen or any other appropriate display, input devices 206 such as a keyboard and control buttons, persistent memory 244, random access memory (RAM) 246, read only memory (ROM) 248, auxiliary input/output (I/O) subsystems 250, data port 252 such as a conventional serial data port or a Universal Serial Bus (USB) data port, speaker 256, microphone 258, short-range wireless communications subsystem 262 (which can employ any appropriate wireless (e.g., RF), optical, or other short range communications technology), and other device subsystems generally designated as 264. Some of the subsystems shown in **Figure 2** perform communication-related functions, whereas other subsystems can provide "resident" or on-device functions.

Display 204 can be realized as a touch-screen display in some embodiments. The touch-screen display can be constructed using a touch-sensitive input surface coupled to an electronic controller and which overlays the visible element of display 204. The touch-sensitive overlay and the electronic controller provide a touch-sensitive input device and processor 240 interacts with the touch-sensitive overlay via the electronic controller.

Communications subsystem 211 includes one or more communication systems for communicating with wireless WAN 115 and wireless access points 125a and 125b within the wireless network. The particular design of wireless communications subsystem depends on the wireless network in which mobile device 130 is intended to operate. Mobile device 130 can send and receive communication signals over the wireless network after the required network registration or activation procedures have been completed.

Processor 240 operates under stored program control and executes software modules 221 stored in memory such as persistent memory 244 or ROM 248. Processor 240 can execute code means or instructions. ROM 248 can contain data, program instructions or both. Persistent memory 244 can contain data, program instructions or both, in some embodiments is rewritable under control of processor 240, and can be realized using any appropriate persistent memory technology, including EEPROM, EAROM, FLASH, and the like. As illustrated in **Figure 2****,** software modules 221 can include operating system software 223. Additionally, software modules 221 can include software applications 225.

In some embodiments, persistent memory 244 stores user-profile information, including a device PIN. Persistent memory 244 also can store information relating to various people, for example, name of a user, a user's identifier (user name, email address, or any other identifier, device PIN), place of employment, work phone number, home address, etc. Persistent memory 244 can additionally store one or more security keys related to workgroup generation.

Software modules 221, for example, secure workgroup sharing system 300, or parts thereof can be temporarily loaded into volatile memory such as RAM 246. RAM 246 is used for storing runtime data variables and other types of data or information. In some embodiments, different assignment of functions to the types of memory could also be used.

Software applications 225 can further include a range of applications, including, for example, an application related to the secure workgroup sharing system 300, e-mail messaging application, address book, calendar application, notepad application, Internet browser application, voice communication (i.e., telephony) application, mapping application, or a media player application, or any combination thereof. Each of software applications 225 can include layout information defining the placement of particular fields and graphic elements (e.g., text fields, input fields, icons, etc.) in the user interface (i.e., display 204) according to the application.

In some embodiments, auxiliary input/output (I/O) subsystems 250 comprise an external communication link or interface, for example, an Ethernet connection. In some embodiments, auxiliary I/O subsystems 250 can further comprise one or more input devices, including a pointing or navigational tool such as a trackpad, touchpad, joystick, clickable trackball or scroll wheel or thumbwheel, or one or more output devices, including a mechanical transducer such as a vibrator for providing vibratory notifications in response to various events on the mobile device 130 (for example, receipt of an electronic message or incoming phone call), or for other purposes such as haptic feedback (touch feedback).

In some embodiments, mobile device 130 also includes one or more removable memory modules 230 (typically comprising FLASH memory) and one or more memory module interfaces 232. Among possible functions of removable memory module 230 is to store information used to identify or authenticate a user or the user's account to the wireless network (for example WAN 115 and/or PLMN 120). For example, in conjunction with certain types of wireless networks, including GSM and successor networks, removable memory module 230 is referred to as a Subscriber Identity Module or SIM. Memory module 230 is inserted in or coupled to memory module interface 232 of mobile device 130 in order to operate in conjunction with the wireless network.

Mobile device 130 stores data 227 in persistent memory 244. In various embodiments, data 227 includes service data comprising information required by mobile device 130 to establish and maintain communication with the wireless network (for example WAN 115 and/or PLMN 120). Data 227 can include secure workgroup sharing system 300 data used by mobile device 130 for various tasks. For example, data 227 can include user-profile information, including unique device identifiers, for example a device personal identification number (PIN). Additionally, the memory can store information relating to various people, for example, name of a user, a user's identifier (user name, email address, or any other identifier), place of employment, work phone number, location information, home address, device PIN, etc.

Mobile device 130 also includes a battery 238 which furnishes energy for operating mobile device 130. Battery 238 can be coupled to the electrical circuitry of mobile device 130 through a battery interface 236, which can manage such functions as charging battery 238 from an external power source (not shown) and the distribution of energy to various loads within or coupled to mobile device 130. Short-range wireless communications subsystem 262 is an additional optional component which provides for communication between mobile device 130 and different systems or devices, which need not necessarily be similar devices. For example, short-range wireless communications subsystem 262 can include an infrared device and associated circuits and components, or a wireless bus protocol compliant communication mechanism such as a BLUETOOTH communication module to provide for communication with similarly-enabled systems and devices.

A predetermined set of applications that control basic device operations, including data and possibly voice communication applications can be installed on mobile device 130 during or after manufacture. Additional applications and/or upgrades to operating system software 223 or software applications 225 can also be loaded onto mobile device 130 through the wireless network (for example, WAN 115 and/or PLMN 120), auxiliary I/O subsystem 250, data port 252, short-range wireless communications subsystem 262, or other suitable subsystem 264. The downloaded programs or code modules can be permanently installed, for example, written into the program memory (for example, persistent memory 244), or written into and executed from RAM 246 for execution by processor 240 at runtime.

Mobile device 130 can provide three principal modes of communication: a data communication mode, a voice communication mode, and a video communication mode. In the data communication mode, a received data signal such as a text message, an e-mail message, Web page download, or an image file are processed by communications subsystem 211 and input to processor 240 for further processing. For example, a downloaded Web page can be further processed by a browser application, or an e-mail message can be processed by an e-mail message messaging application and output to display 204. A user of mobile device 130 can also compose data items, such as email messages, for example, using the input devices in conjunction with display 204. These composed items can be transmitted through communications subsystem 211 over the wireless network (for example, WAN 115 and/or PLMN 120). In the voice communication mode, mobile device 130 provides telephony functions and operates as a typical cellular phone. In the video communication mode, mobile device 130 provides video telephony functions and operates as a video teleconference term. In the video communication mode, mobile device 130 utilizes one or more cameras (not shown) to capture video of video teleconference. Additionally, in some embodiments, mobile device 130 utilizes the one or more cameras to capture video. The video can be stored as one or more video data files in persistent memory 244, RAM 248, memory module 230, or any other data storage medium.

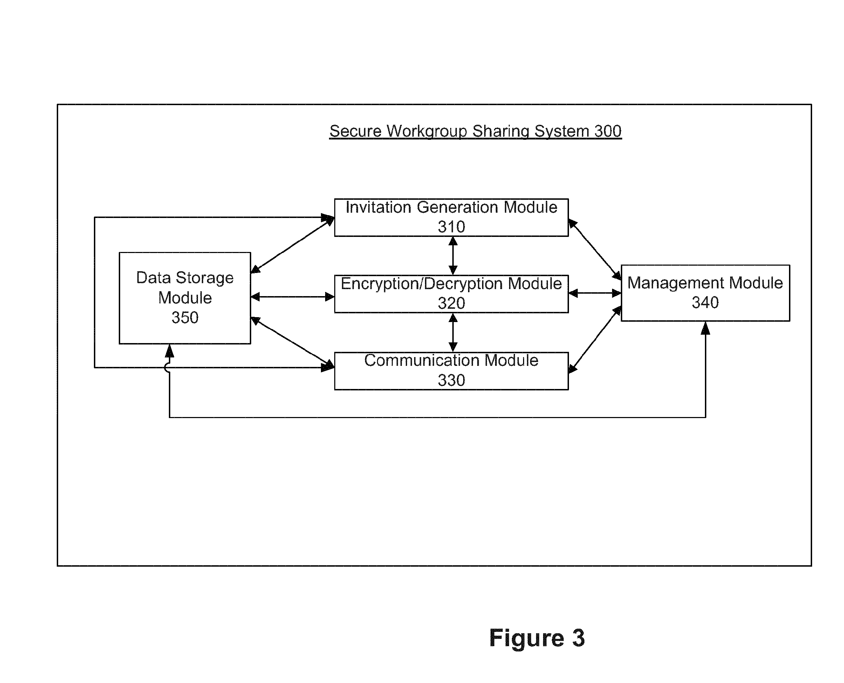

**Figure 3** is a block diagram depicting example secure workgroup sharing system 300 implemented on an organizing device, for example, mobile device 130, mobile device 135, mobile device 136, mobile device 140, computer 142, and computer 143. As illustrated, secure workgroup sharing system 300 includes an invitation generation module 310, an encryption/decryption module 320, a communication module 330, a management module 340, and a data storage module 350. It is appreciated that one or more of these modules can be deleted, modified, or combined together with other modules.

Invitation generation module 310 generates a secure workgroup invitation. Secure workgroup sharing system 300 displays the secure workgroup invitation on a display of the organizing device. Invitation generation module 310 enables modification of any of the fields of the secure workgroup invitation. For example, invitation generation module 310 enables the user to designate invitees, by for example, adding invitees or subtracting invitees from an invitee list. Invitation generation module also communicates with encryption/decryption module 320 to generate a workgroup security key. Invitation generation module 310 can communicate with management module 340, communication module 330, and data storage module 350.

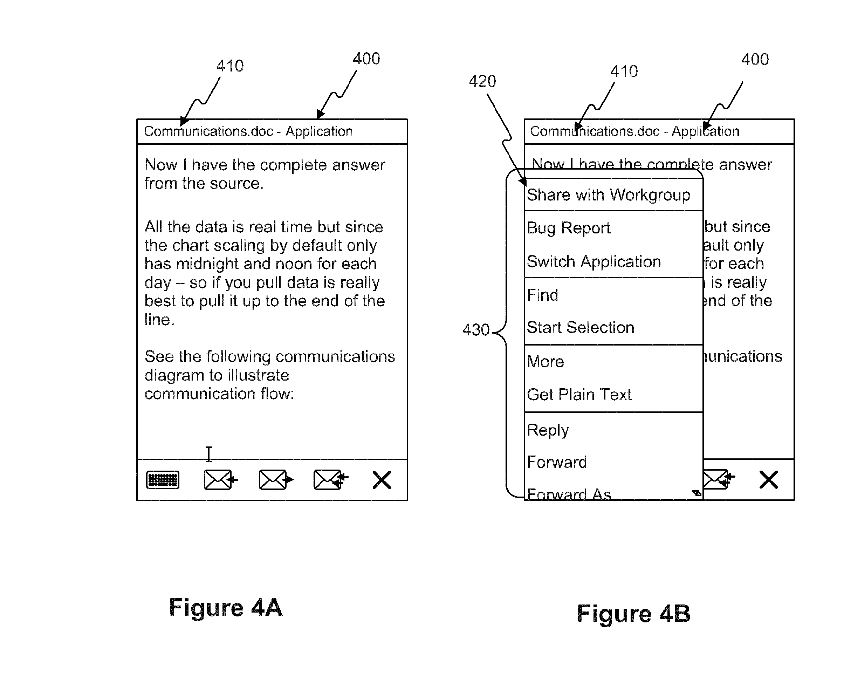

**Figure 4A** illustrates an example application 400 open on an organizing device. Application 400 can be a number of different applications. Application 400 can open a data file 410, for example, an email message, an instant message, a group discussion, an update thread on Lotus™ connections, a group message on Facebook™, a post on Twitter™, Microsoft Office™ Data File (Word file, Excel file, etc.), a PDF file, an audio file, a video data file, an image file, or any other file that Application 400 to configured to open.

**Figure 4B** illustrates an example application 400 and a menu 430. While data file 410 (e.g., Communications.doc) is displayed, it is not necessary for the operating device to display data file 410. Menu 430 can contain a plurality of commands, one of which includes share with workgroup command 420. Selecting share with workgroup command 420 triggers the execution of secure workgroup sharing system 300. In some embodiments, share with workgroup command 420 can be accessed via an actual button on the organizing device.

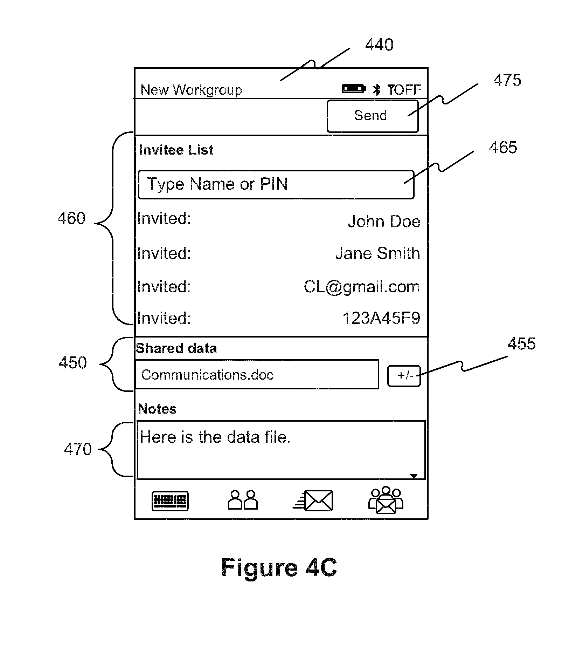

**Figure 4C** illustrates an example new workgroup graphical user interface (GUI) 440 that is generated by invitation generation module 310 when a user executes secure workgroup sharing system 300. Shared data field 450 displays the name of the data file or files included in the list of files to be shared. In some embodiments, if share with workgroup command 420 is executed while viewing a particular file (for example data file 410), invitation generation module 310 automatically populates shared data field 450 with the name of the data file to be shared (for example, Communications.doc). Additionally, new workgroup GUI 440 includes one or more add/remove file button(s) 455. Add/remove file button 455 allows the user to manually add data files to the list of data files to be shared. Additionally, add/remove file button 455 allows the user to remove data files from the list of data files to be shared.

New workgroup GUI 440 includes an invitee list 460. Invitee list 460 can include an invitee entry location 465. Invitee entry location 465 allows the user to manually enter an invitee identifier to designate an invitee to receive the workgroup invitation. Invitee identifiers can include invitee device PIN, name of a user, user name, email address, place of employment, work phone number, home address, etc. In some embodiments, one or more user identifiers are used by a server (for example, instant messaging server 132) to securely route the secure workgroup invitation to the invitee. In some embodiments, the invitee identifier has a corresponding device PIN associated with the invitee's device. In this embodiment, when the user enters the invitee identifier, the invitation generation module 310 references data storage module 350 to match the invitee identifier with the device PIN associated with the invitee. If no device PIN is located, invitation generation module 310 prompts the user to manually enter the invitee's device PIN. If a device PIN is located, then invitation generation module 310 displays the designated invitee within invitee list 460 and includes their associated device PIN within the secure workgroup invitation. The device PIN is used by a server (for example, instant messaging server 132) to securely route the secure workgroup invitation to the invitee. The designated invitees can be displayed by any invitee identifier, for example, name, email address, or device PIN, etc. Additionally, in some embodiments not shown, invitee list 460 does not display designated invitees.

In some embodiments, new workgroup GUI 440 includes a notes field 470. Notes field 470 allows the user to input text, images, or a combination thereof, that can be displayed to the designated invitees when they receive the secure workgroup invitation.

In some embodiments, new workgroup GUI 440 includes a send button 475. When executed, send button 475 operates to send the secure workgroup invitation to the designated invitees. In some embodiments (not shown), send button 475 is a physical button on the device.

Referring back to **Figure 3****,** encryption/decryption module 320 generates a workgroup security key that is included within the secure workgroup invitation. If the invitees elect to join the workgroup, the invitee devices use the workgroup security key to connect to the secure workgroup. The workgroup security key can be generated via various Wi-Fi encryption protocols, for example, WEP, WPA, WPA2, etc. In some embodiments, encryption/decryption module 320 also encrypts the secure workgroup invitation being sent to the designated invitees, using for example the secure sockets layer protocol. In some embodiments, the security key generated has a lifetime associated with it, such that once the secure workgroup invitation is sent, secure workgroup sharing system 300 only accepts invitation acceptances of the secure workgroup invitation during the lifetime of the security key, for example sixty seconds after the secure workgroup invitation is sent. For example, if the lifetime associated with the security key is sixty seconds from the time the secure workgroup invitation is sent, any invitation acceptances received within sixty seconds would be accepted by the organizing device, and any invitation acceptances received after 60 seconds would be rejected by the organization device. Additionally, in some embodiments, the invitee device is prompted to join the secure workgroup. Moreover, in some embodiments, the invitee device automatically removes the join prompt after the security key lifetime expires. Encryption/decryption module 320 can communicate with invitation generation module 310, communication module 330, management module 340, and data storage module 350.

Communication module 330 is configured to transmit the secure workgroup invitation, via enterprise network 105, PLMN 120, WAN 115, or some combination thereof. In some embodiments, communication module 330 is configured to send the secure workgroup invitation to a receiving server, for example, an instant messaging server residing on the enterprise network (for example instant messaging server 132), a web server, a mail server, a voice over IP (VOIP) registrar, some other request/response-oriented server, or any combination thereof. The receiving server then relays the secure workgroup invitation to the designated invitees using the invitee devices' PINs included within the secure workgroup invitation. Communication module 330 is configured to receive one or more invitation acceptances from the invitee devices and pass them to management module 340. Management module 340 instructs communication module 330 is to establish a peer-to-peer connection with one or more invitee devices. This peer-to-peer connection can result in direct communications between the organizing device and the one or more invitee devices. The peer-to-peer connection can be a Wi-Fi connection, Bluetooth, an infrared connection, etc. Communication module 330 is configured to transmit and receive data once the secure workgroup is established. In some embodiments, communications module 330 can store the secure workgroup invitation in data storage module 350.

In some embodiments not shown, one or more of the invitees can be outside of Wi-Fi range. For example, in the event that mobile device 140 is sent a secure workgroup invitation and mobile device 140 is out of Wi-Fi range, secure workgroup sharing system 300 first determines that it is out of physical range for establishing Wi-Fi connectivity through a timeout mechanism. The time out mechanism is implemented by secure workgroup sharing system 300, which attempts to couple with mobile device 140 for a predetermined period of time. If no coupling occurs after the period of time expires, secure workgroup sharing system 300 locates alternate means (for example WAN 115) for coupling. This coupling can be established in the same way a media connection is established in VOIP calls. For example, through the use of STUN/TURN/ICE protocol implementation, in which two devices behind firewalls or other network-proxy mechanisms can negotiate a data transfer channel, without server based routing.

Communication module 330 can be coupled to invitation generation module 310, encryption/decryption module 320, management module 340, and data storage module 350.

Management module 340 is configured to accept or deny received invitees' invitation acceptances. In some embodiments, when an invitation acceptance with the correct security key is received by the organizing device, the management module 340 prompts the user to allow an invitee to join the secure workgroup. Additionally, in some embodiments, when an invitation acceptance with the correct security key is received by the organizing device, the management module 340 automatically joins the invitee. In this embodiment, the management module 340 can be configured to prompt the user that an invitee has joined the secure workgroup. Additionally, management module 340 can be configured to automatically reject any invitation acceptances received after the lifetime of the security key has expired.

Once the secure workgroup is established with one or more invitees, management module 340 automatically sends (for example, via communication module 330) the data file (for example Communications.doc in **Figure 4C****)** to a participating invitee (invitee who is part of the secure workgroup) via a peer-to-peer connection (for example, Wi-Fi) after they join the secure workgroup. In some embodiments, the organizing device prompts the user to send the data file to one or more participating invitees. Additionally, in some embodiments the data file is sent after all invitees join the secure workgroup. Management module 320 can communicate with invitation generation module 310, encryption/decryption module 320, communication module 330, and data storage module 350.

Data storage module 350 can include a database, one or more computer files in a directory structure, or any other appropriate data storage mechanism such as a memory. Additionally, in some embodiments, data storage module 350 stores user profile information, including, device PIN, user identifier, location information, generated security keys, etc. Data storage module 350 also stores information relating to various people, for example, name, place of employment, work phone number, location information, home address, etc. In some example embodiments, data storage module 350 is distributed across one or more network servers, for example, mail server 145. Data storage module 350 can communicate with invitation generation module 310, encryption/decryption module 320, communication module 330, and management module 340.

Each of modules 310,320,330,340, and 350 can be software programs stored in a RAM, a ROM, a PROM, a FPROM, or other dynamic storage device for storing information and instructions.

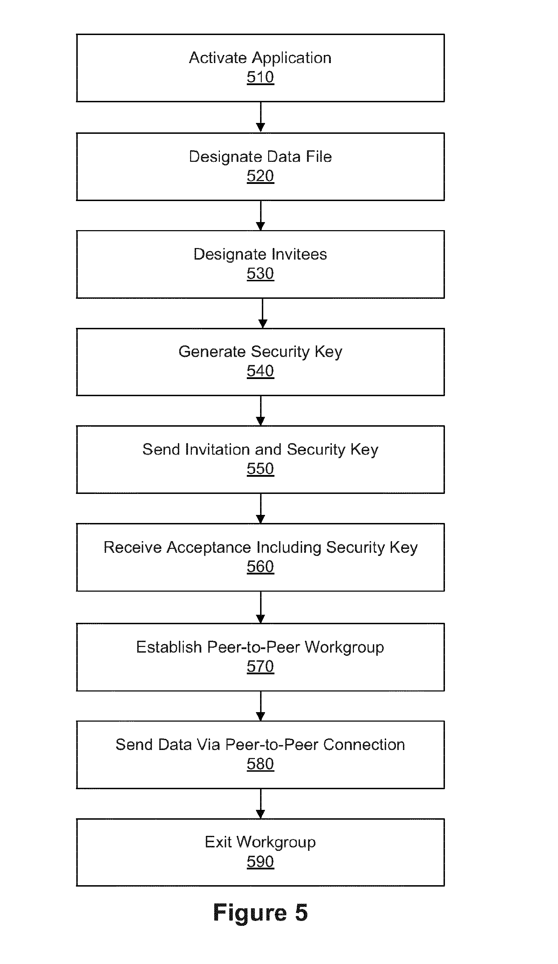

**Figure 5** is a flowchart representing an example method for generating a secure workgroup invitation on an organizing device. While the flowchart discloses the following steps in a particular order, it is appreciated that at least some of the steps can be moved, modified, or deleted where appropriate.

In step 510, a secure workgroup sharing application is activated. In some embodiments, secure workgroup sharing system is executed by a software menu command that is part of a menu (for example share with workgroup command 420 that is a subcommand of menu 430). Additionally, in some embodiments, the menu can be accessed via an actual button on the organizing device. When activated, the secure workgroup sharing system can generate a display a secure workgroup invitation containing one or more fields. In some embodiments, the fields can include the designated invitees (for example, invitee list 460), names of one or more data files to be shared (for example, shared data 450), and a notes field (for example, notes 470).

In step 520, a data file is designated to be shared. In some embodiments, when a user executes secure workgroup sharing system with the data file open the data file is automatically designated. The data files can be, for example, an email message, an instant message, a group discussion, an update thread on Lotus™ connections, a group message on Facebook™, a post on Twitter™, Microsoft Office™ Data File (Word file, Excel file, etc.), a PDF file, an audio file, a video data file, an image file, etc. Additionally, in some embodiments, secure workgroup sharing system can allow the user to manually designate files to be shared.

In step 530, invitees are designated to receive the secure workgroup invitation. In some embodiments, the organizing device receives from the user one or more designated invitees. In some embodiments, the user of the organizing device manually enters an invitee identifier to designate the invitee to receive the workgroup invitation. Invitee identifiers can include invitee device PIN, name of a user, user name, email address, place of employment, work phone number, home address, etc.

In some embodiments not shown, an invitee identifier has a corresponding device PIN that is associated with the invitee's device. After a user enters the invitee identifier, the secure workgroup sharing system references a memory to match the invitee identifier with a device PIN associated with the invitee. If no device PIN is located, secure workgroup sharing system prompts the user to manually enter the invitee's device PIN. If a device PIN is located, the secure workgroup sharing system considers the invitee designated and includes the associated device PIN within the secure workgroup invitation.

Additionally, in some embodiments not shown, the organizing device automatically retrieves the invitees device PINs from one or more servers. In some embodiments, one or more of the invitee devices can send a message to a central server. In some embodiments, the message includes the invitee's device PIN. In other embodiments, the message authorizes the server to release the invitee's device PIN to the organizing device. The message can include an associated lifetime (time limit), such that the organizing device is able to acquire the invitee device PIN only within the set lifetime (for example, sixty seconds after the message is sent). The message can also include one or more user identifiers, for example, a name or an email address. The message also can include location information and a time stamp. The server can correlate the location information and the time stamp of the invitee's messages with a request sent from the organizing device to determine which device PINs to distribute to the organizing device.

In this embodiment, the organizing device sends a request for the unknown device PIN to the server. For example, the request can include a time stamp, location information, and one or more user identifiers. The server would then match the request to the appropriate device PIN and send the device PIN to the organizing device. Additionally, in some embodiments, the organizing device can automatically populate the designated invitee list by sending the request to the server. The server can then correlate one or more of the time stamp, location information, and user identifiers, in the request to any messages received with similar time stamp, location information, and user identifiers. The server then sends the device PINs associated with the correlated messages to the organizing device. The organizing device can then use this information to automatically designate invitees for the secure workgroup.

In step 540, the secure workgroup sharing system generates a security key included within the secure workgroup invitation. If the invitees elect to join the workgroup, the invitee devices use the workgroup security key to connect to the secure workgroup. The workgroup security key can be generated via various Wi-Fi encryption protocols, for example, WEP, WPA, WPA2, etc. In some embodiments, the security key generated has a lifetime associated with it, such that once the secure workgroup invitation is sent, the secure workgroup sharing system only accepts invitation acceptances during the lifetime of the security key, for example sixty seconds after the secure workgroup invitation is sent. In this embodiment, if the lifetime associated with the security key is sixty seconds from the time the secure workgroup invitation is sent, any invitation acceptances received within sixty seconds are accepted by the organizing device, and any invitation acceptances received after sixty seconds are rejected by the organizing device.

In step 550, the secure workgroup sharing system sends the secure workgroup invitation to the designated invitees. The secure workgroup invitation includes the generated security key. In some embodiments, the secure workgroup invitation is sent to a receiving server, for example, an instant messaging server residing on the enterprise network (for example instant messaging server 132), a web server, a mail server, a voice over IP registrar, some other request/response-oriented server, or any combination thereof. In some embodiments, secure workgroup sharing system also encrypts the secure workgroup invitation being sent to the designated invitees, using for example the secure sockets layer protocol.

In step 560, the organizing device receives an invitation acceptance of the secure workgroup invitation from at least one of the one or more invitee mobile devices. In step 570, the organizing device establishes a peer-to-peer workgroup connection with one or more of the designated invitee devices. The peer-to-peer connection can be established via Wi-Fi, Bluetooth, infrared etc. The secure workgroup sharing system is configured to accept or deny received invitation acceptances. In some embodiments, when an invitation acceptance with the correct security key is received via Wi-Fi, Bluetooth, infrared, or some other peer-to-peer connection, by the organizing device, the secure workgroup sharing system automatically establishes a secure workgroup between the organizing device and the invitee device. As additional valid invitation acceptances are received, the organizing device can automatically join the additional invitee devices.

In some embodiments not shown, when the organizing device receives an invitation acceptance with the correct security key, the secure workgroup sharing system prompts the user to allow the invitee to join the secure workgroup. Additionally, in other embodiments not shown, the secure workgroup sharing system can be configured to prompt the user that an invitee has joined the secure workgroup. Additionally, the secure workgroup sharing system can be configured to automatically reject any invitation acceptances received after a lifetime of the security key has expired.

In step 580, the secure workgroup sharing system automatically sends the data file (for example Communications.doc in **Figure 4C****)** to a participating invitee (invitee who is part of the secure workgroup) via a Wi-Fi connection. In some embodiments, the organizing device prompts the user to send the data file to one or more participating invitees. Additionally, in some embodiments the data file is sent after all the invitees join the secure workgroup. In step 590, the organizing device exits the workgroup.

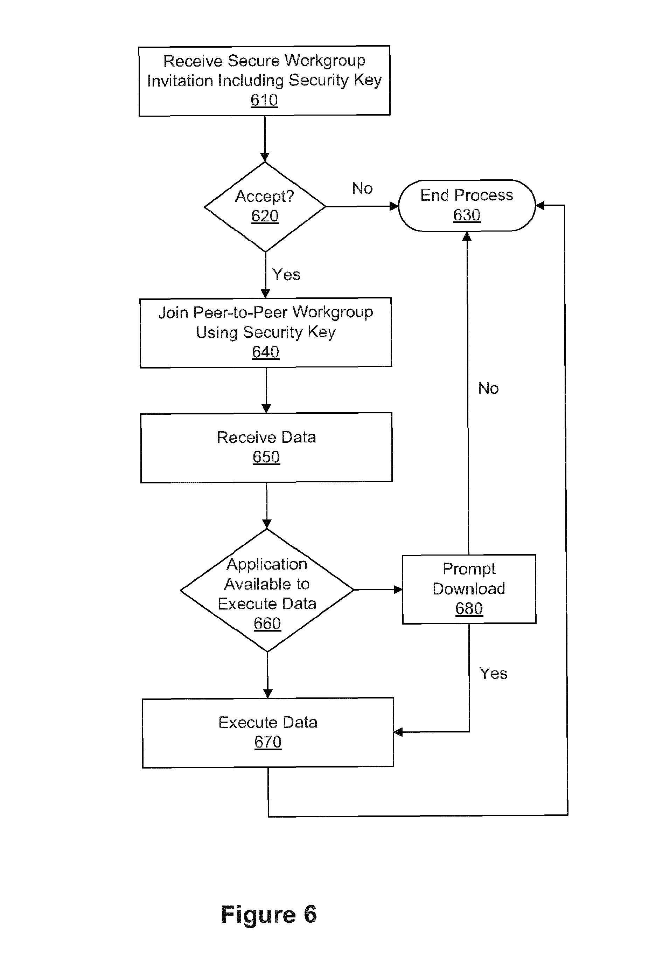

**Figure 6** is a flowchart representing an example method for joining a secure workgroup. While the flowchart discloses the following steps in a particular order, it is appreciated that at least some of the steps can be moved, modified, or deleted where appropriate.

In step 610, a secure workgroup invitation, generated by a secure workgroup sharing system, is received by an invitee device. In some embodiments, the secure workgroup invitation is received from a receiving server, for example, an instant messaging server residing on the enterprise network (for example instant messaging server 132), a web server, a mail server, a voice over IP registrar, some other request/response-oriented server, or any combination thereof. The secure workgroup invitation includes a security key that can be used to access the secure workgroup via a Wi-Fi peer-to-peer connection. In some embodiments, when the secure workgroup invitation is received, the invitee device automatically prompts the invitee to accept or decline the invitation (step 620). In some embodiments, the prompt displays information from a notes field within the secure workgroup invitation (for example, notes 470). If the invitee declines the secure workgroup invitation, the process ends (step 630). In some embodiments not shown there is no step 620 and the invitee device automatically joins the secure workgroup after a secure group invitation is received. If the invitee device accepts the secure workgroup invitation, the invitee device sends an invitation acceptance to the organizing device.

After sending the invitation acceptance the invitee device joins the peer-to-peer workgroup via a peer-to-peer connection (step 640). The peer-to-peer connection can be established via Wi-Fi, Bluetooth, infrared, etc. The peer-to-peer connection is established between the organizing and invitee devices using the security key that is included in the secure workgroup invitation. In some embodiments not shown, the security key has a lifetime associated with it, such that once the secure workgroup invitation is sent from an organizing device, the organizing device only accepts invitation acceptances during the lifetime of the security key, for example sixty seconds after the secure workgroup invitation is sent. In this embodiment, if the lifetime associated with the security key is sixty seconds from the time the secure workgroup invitation is sent, any invitation acceptances received within sixty seconds are accepted by the organizing device, and any invitation acceptances received after sixty seconds are rejected by the organizing device. In some embodiments not shown, one or more of the invitees can be outside of Wi-Fi range. For example, in the event that the mobile device (e.g., mobile device 140) is sent a secure workgroup invitation and the mobile device 140 is out of Wi-Fi range, the secure workgroup sharing system first determines that it is out of physical range for establishing Wi-Fi connectivity through a timeout mechanism. The time out mechanism is implemented by secure workgroup sharing system, which attempts to couple with mobile device 140 for a predetermined period of time. If no coupling occurs after the period of time expires, the secure workgroup sharing system locates alternate means (for example WAN 115) for coupling. This coupling can be established in the same way a media connection is established in VOIP calls. For example, through the use of STUN/TURN/ICE protocol implementation, in which two devices behind firewalls or other network-proxy mechanisms can negotiate a data transfer channel, without server based routing.

Once the invitee device is coupled with the peer-to-peer workgroup, the invitee device receives one or more data files (step 650) from the organizing device over the peer-to-peer connection. The peer-to-peer connection can be established via Wi-Fi, Bluetooth, infrared, etc. The data files can be for example an email message, an instant message, a group discussion, an update thread on Lotus™ connections, a group message on Facebook™, a post on Twitter™, Microsoft Office™ Data File (Word file, Excel file, etc.), a PDF file, an audio file, a video data file, an image file, etc.

In step 660, the invitee device determines if there is an application available to the invitee device that can execute the received data file. The invitee device can make this determination by referencing software applications installed on the invitee device. Additionally, in some embodiments, invitee device can reference applications that are executed remotely. If the invitee device identifies an application capable of executing the received data file in step 670 the invitee device executes the data file. In some embodiments not shown, the invitee device first prompts the invitee whether or not to execute the received data file.

If the invitee device determines that no application is available to execute the received data file, the invitee device prompts the invitee to download the proper application (step 680). If the invitee accepts the prompt, the invitee device automatically locates and downloads an application to execute the received data. The invitee device can locate an application to execute the received data by sending a search inquiry to one or more remote servers. The connection to the servers can be, for example, through a wireless network or the intranet. Additionally, in some embodiments, the invitee device can locate and download an application to execute the received data from one of the devices coupled to the peer-to-peer workgroup. In some embodiments not shown, once the invitee device locates an application, at a particular location, to execute the received data, the invitee device prompts the invitee whether they wish to download the application from that location. If the invitee declines the prompt the process ends (630).

Certain adaptations and modifications of the described embodiments can be made. Therefore, the above discussed embodiments are considered to be illustrative and not restrictive.

Embodiments of the present application are not limited to any particular operating system, mobile device architecture, server architecture, or computer programming language.

## Claims

1. A method comprising:
activating a secure workgroup sharing system (300) between an organizing mobile device (130) and one or more invitee mobile devices (136, 140, 142), wherein activating the secure workgroup sharing system generates a secure workgroup invitation;
sending the secure workgroup invitation and a security key to one or more invitees associated with the one or more invitee mobile devices; and
receiving a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key matches the sent security key.

2. The method of claim 1, wherein receiving a designation of the one or more invitees that are to receive the secure workgroup invitation includes receiving a user identifier associated with the invitee.

3. The method of claim 1 or 2, wherein the sent security key has an associated lifetime such that an invitee device cannot join the peer-to-peer workgroup after the lifetime expires.

4. The method of any of claims 1 to 3, further comprising:
acquiring a data file to share with one or more invitee mobile devices, prior to sending the secure workgroup invitation; and
automatically sending the data file to one or more invitee mobile devices connected to the peer-to-peer workgroup.

5. The method of claim 4, wherein the data file is automatically acquired by the secure workgroup invitation if the secure workgroup sharing system is activated while the data file is opened on the operating device.

6. The method of claim 5, wherein the data file is manually selected to be acquired by the secure workgroup invitation.

7. The method of any of claims 1 to 6, wherein the organizing device generates the security key that is sent with the secure workgroup invitation.

8. A non-transitory computer-readable medium comprising program code, the program code being operable, when executed by a mobile device, to cause the mobile device to perform a method, the method comprising:
activating a secure workgroup sharing system (300) between an organizing mobile device (130) and one or more invitee mobile devices (136, 140, 142), wherein activating the secure workgroup sharing system generates a secure workgroup invitation;
sending the secure workgroup invitation and a security key to one or more invitees associated with the one or more invitee mobile devices; and
receiving a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key matches the sent security key.

9. The computer readable medium of claim 8, wherein receiving a designation of the one or more invitees that are to receive the secure workgroup invitation includes receiving a user identifier associated with the invitee.

10. The computer readable medium of claim 8 or 9, wherein the sent security key has an associated lifetime such that an invitee device cannot join the peer-to-peer workgroup after the lifetime expires.

11. The computer readable medium of any of claims 8 to 10, further comprising:
acquiring a data file to share with one or more invitee mobile devices, prior to sending the secure workgroup invitation; and
automatically sending the data file to one or more invitee mobile devices connected to the peer-to-peer workgroup.

12. The computer readable medium of claim 11, wherein the data file is automatically acquired by the secure workgroup invitation if the secure workgroup sharing system is activated while the data file is opened on the operating device.

13. The computer readable medium of claim 11, wherein the data file is manually selected to be acquired by the secure workgroup invitation.

14. The computer readable medium of any of claims 8 to 13, wherein the organizing device generates the security key that is sent with the secure workgroup invitation.

15. A mobile device (130) comprising:
a memory storing computer instructions (246);
one or more processors (240) configured to execute the computer instructions such that the mobile device is configured to:
activate a secure workgroup sharing system (300) between the mobile device and one or more invitee mobile devices (136, 140, 142),, wherein activating the secure workgroup sharing system generates a secure workgroup invitation;
send the secure workgroup invitation and a security key to one or more invitees associated with the one or more invitee mobile devices; and
receive a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key matches the sent security key.

## Amended claims

### Amended claims in accordance with Rule 137(2) EPC.

**1.** A method comprising:
activating a secure workgroup sharing system (300) between an organizing mobile device (130) and one or more invitee mobile devices (136, 140, 142), wherein activating the secure workgroup sharing system generates a secure workgroup invitation;
sending the secure workgroup invitation and a security key to one or more invitees associated with the one or more invitee mobile devices;
receiving, at the organizing device, a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key is a correct security key that corresponds to the sent security key.

**2.** The method of claim 1, wherein receiving a designation of the one or more invitees that are to receive the secure workgroup invitation includes receiving a user identifier associated with the invitee.

**3.** The method of claim 1 or 2, wherein the sent security key has an associated lifetime such that an invitee device cannot join the peer-to-peer workgroup after the lifetime expires.

**4.** The method of any of claims 1 to 3, further comprising:
acquiring a data file to share with one or more invitee mobile devices, prior to sending the secure workgroup invitation; and
automatically sending the data file to one or more invitee mobile devices connected to the peer-to-peer workgroup.

**5.** The method of claim 4, wherein the data file is automatically acquired by the secure workgroup invitation if the secure workgroup sharing system is activated while the data file is opened on the operating device.

**6.** The method of claim 5, wherein the data file is manually selected to be acquired by the secure workgroup invitation.

**7.** The method of any of claims 1 to 6, wherein the organizing device generates the security key that is sent with the secure workgroup invitation.

**8.** A non-transitory computer-readable medium comprising program code, the program code being operable, when executed by a mobile device, to cause the mobile device to perform a method, the method comprising:
activating a secure workgroup sharing system (300) between an organizing mobile device (130) and one or more invitee mobile devices (136, 140, 142), wherein activating the secure workgroup sharing system generates a secure workgroup invitation;
sending the secure workgroup invitation and a security key to one or more invitees associated with the one or more invitee mobile devices;
receiving, at the organizing device, a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key is a correct security key that corresponds to the sent security key.

**9.** The computer readable medium of claim 8, wherein receiving a designation of the one or more invitees that are to receive the secure workgroup invitation includes receiving a user identifier associated with the invitee.

**10.** The computer readable medium of claim 8 or 9, wherein the sent security key has an associated lifetime such that an invitee device cannot join the peer-to-peer workgroup after the lifetime expires.

**11.** The computer readable medium of any of claims 8 to 10, further comprising:
acquiring a data file to share with one or more invitee mobile devices, prior to sending the secure workgroup invitation; and
automatically sending the data file to one or more invitee mobile devices connected to the peer-to-peer workgroup.

**12.** The computer readable medium of claim 11, wherein the data file is automatically acquired by the secure workgroup invitation if the secure workgroup sharing system is activated while the data file is opened on the operating device.

**13.** The computer readable medium of claim 11, wherein the data file is manually selected to be acquired by the secure workgroup invitation.

**14.** The computer readable medium of any of claims 8 to 13, wherein the organizing device generates the security key that is sent with the secure workgroup invitation.

**15.** A mobile device (130) comprising:
a memory storing computer instructions (246);
one or more processors (240) configured to execute the computer instructions such that the mobile device is configured to:
activate a secure workgroup sharing system (300) between the mobile device and one or more invitee mobile devices (136, 140, 142), wherein activating the secure workgroup sharing system generates a secure workgroup invitation,
send the secure workgroup invitation and a security key to one or more invitees associated with the one or more invitee mobile devices;
receive, at the organizing device, a security key and an acceptance of the secure workgroup invitation from at least one of the one or more invitee mobile devices, thereby establishing a peer-to-peer workgroup allowing direct secure communications between the organizing mobile device and at least one of the one or more invitee mobile devices, wherein the received security key is a correct security key that corresponds to the sent security key.
